(19) Europäisches Patentamt
European Patent Office
Office européen des brevets

(11) **EP 4 692 951 A1**

(12) **EUROPEAN PATENT APPLICATION**

(43) Date of publication:
**11.02.2026 Bulletin 2026/07**

(21) Application number: **25189509.0**

(22) Date of filing: **15.07.2025**

(51) International Patent Classification (IPC):
**G03G 15/08** *(2006.01)*  **G03G 15/00** *(2006.01)*
**G03G 21/18** *(2006.01)*

(52) Cooperative Patent Classification (CPC):
**G03G 21/181; G03G 15/0863; G03G 15/0894;
G03G 15/5091; G03G 21/1878; G03G 21/1882;
G03G 21/1889; G03G 21/1892;** G03G 2215/00987;
G03G 2221/1823

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.08.2024 JP 2024131205**

(71) Applicant: **Canon Kabushiki Kaisha
Tokyo, 146-8501 (JP)**

(72) Inventors:
• **INOUE, Naoki
Tokyo, 146-8501 (JP)**
• **NAMIKI, Takayuki
Tokyo, 146-8501 (JP)**

(74) Representative: **TBK
Bavariaring 4-6
80336 München (DE)**

(54) **DEVICE ATTACHABLE TO AND DETACHABLE FROM IMAGE-FORMING APPARATUS, AND METHOD AND APPARATUS FOR REMANUFACTURING THE DEVICE**

(57)      A device (10) that can be attached to an image-forming apparatus (100) includes a memory (20) including first and second storage areas (31, 33), control circuitry (24), and a connection interface (22) for connecting to an information processing apparatus (200) at a time of remanufacturing the device. The first storage area stores first information specific to the device. The second storage area stores second information read out and used by the image-forming apparatus and a digital signature generated based on the first and second information. At a time of the remanufacturing, the control circuitry receives the second information, the digital signature, and authentication information from the information processing apparatus via the connection interface, and allows the second information and the digital signature to be written to the second storage area if verification of the second information based on the authentication information is successful.

F I G. 7

**Description**

TECHNICAL FIELD

The present disclosure relates to a device that can be attached to and detached from an image-forming apparatus, and a method and an apparatus for remanufacturing the device.

BACKGROUND

An image-forming apparatus such as a copying machine, a printer, a facsimile receiver, and a multi-function peripheral forms images on a sheet using a development agent such as toner or ink and a consumable member such as a photosensitive drum. Such a consumable component element is often housed inside a device that can be attached to and detached from the image-forming apparatus. Thus, when the development agent is depleted or the component element has no remaining service life, the user attaches a new device to the image-forming apparatus. Japanese Patent Laid-Open No. 2023-106130 describes a cartridge type of device (for example, a process cartridge) that is stationarily attached to an image-forming apparatus and a replenishing type of device (for example, a replenishment pack) that is temporarily attached to the image-forming apparatus when the development agent is replenished.
In recent years, due to increasing environmental concerns, methods are being looked into for designing in advance how to reuse spent devices in image-forming apparatuses without discarding the devices. For example, in order to reuse devices, a remanufacturing service provider may perform the work of collecting spent devices and replenishing development agents and replacing worn members. WO 2022/173444 A1 describes technology for ensuring appropriate operation of an image-forming apparatus when a device is being reused in which an apparatus authenticated by a cloud service writes data relating to the remanufactured device to a device memory.

SUMMARY

With the technology of WO 2022/173444 A1, since the device itself does not have a function that guarantees validity of the data writing, there still remains a risk that the reuse of the remanufactured device will cause an inappropriate operation of the image-forming apparatus.
The present disclosure aims at reducing a risk that reuse of a remanufactured device causes an inappropriate operation of an image-forming apparatus.
The present disclosure in its first aspect provides a device as specified in claim 1. Optional features are specified in claim 2 to 13.
The present disclosure in its second aspect provides a method for remanufacturing a device as specified in claim 14.
The present disclosure in its third aspect provides an information processing apparatus as specified in claim 15.
Features of the present disclosure will become apparent from the following description of embodiments with reference to the attached drawings. The following description of embodiments is described by way of example.

BRIEF DESCRIPTION OF THE DRAWINGS

Fig. 1 is a schematic view for a schematic configuration of a cartridge authentication system according to an embodiment.
Fig. 2 is a schematic cross-sectional view illustrating an example of a physical configuration of the inside of a cartridge.
Fig. 3 is a schematic perspective view illustrating an example of an external appearance of a cartridge memory.
Fig. 4 is a schematic cross-sectional view illustrating an example of a physical configuration of the inside of a printer to which the cartridge is attached.
Fig. 5 is a schematic perspective view illustrating an example of an external appearance of a connection interface of a remanufacturing apparatus.
Fig. 6 is an explanatory diagram of an example of a configuration of a storage area of a cartridge memory.
Fig. 7 is a block diagram illustrating an example of connection relationship between the cartridge when the cartridge is remanufactured, the remanufacturing apparatus, and a management server and configurations of the respective apparatuses.
Fig. 8 is a sequence diagram illustrating an example of a flow of rewriting processing executed at the time of remanufacturing of the cartridge.
Fig. 9 is a block diagram illustrating an example of a control function of the printer to which the cartridge is attached.

Fig. 10 is a sequence diagram illustrating an example of a flow of cartridge authentication processing executed by the printer.

Fig. 11 is a sequence diagram illustrating an example of a flow of job control processing executed by the printer.

Fig. 12 is an explanatory diagram of an example of a configuration of a storage area of a cartridge memory according to a modification example.

Fig. 13 is a sequence diagram illustrating an example of a flow of rewriting processing according to a modification example.

Fig. 14 is a sequence diagram illustrating an example of a flow of cartridge authentication processing according to a modification example.

DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

<1. System Overview>

<1-1. Overall Configuration>

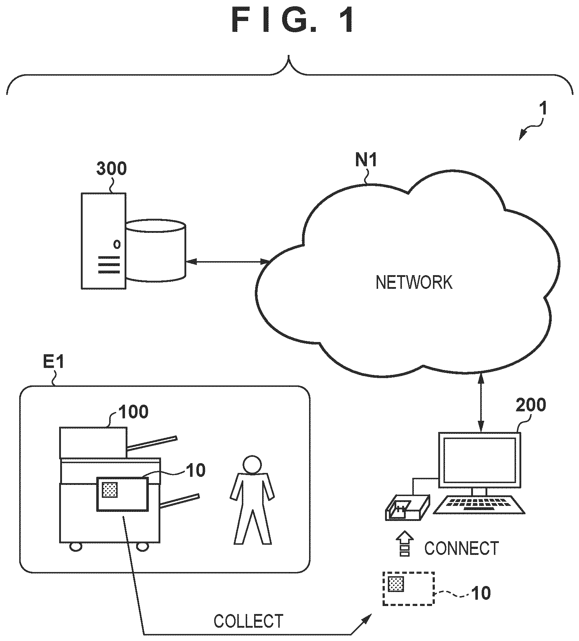

Fig. 1 is a schematic view for a schematic configuration of a cartridge authentication system 1 according to an embodiment. As illustrated in Fig. 1, the cartridge authentication system 1 includes a cartridge 10, a printer 100, a remanufacturing apparatus 200, and a management server 300.

The cartridge 10 is a device that can be attached to and detached from the printer 100. The printer 100 operates in a state where the cartridge 10 is attached to it. In the present embodiment, an example in which the cartridge 10 is a process cartridge will be mainly described. In other embodiments, the cartridge 10 may be a toner cartridge, an ink cartridge, or another type of cartridge. Note that the technology according to the present disclosure can be applied to other types of devices such as a replenishment pack that is temporarily attached to an image-forming apparatus to replenish the development agent.

The printer 100 is an image-forming apparatus installed in a user environment E1. In the present embodiment, an example in which the printer 100 is a laser printer that forms images on sheet via electro-photography will be mainly described. In other embodiments, the printer 100 may be an inkjet printer or another type of printer. The printer 100 may be a monochrome printer or a color printer. Note that the technology according to the present disclosure can be applied to another type of image-forming apparatus such as a copying machine or a multi-function peripheral.

The remanufacturing apparatus 200 is an apparatus that writes information to the cartridge 10 at the time of remanufacturing of the cartridge 10. Typically, the remanufacturing apparatus 200 is used by the remanufacturer when working to remanufacture the cartridge 10. The remanufacturer may be the same as the manufacturer of the printer 100 or different. The remanufacturing apparatus 200 may be a general-purpose information processing apparatus such as a personal computer (PC) or may be a dedicated apparatus for writing information to the cartridge 10. The remanufacturing apparatus 200 includes a connection interface described below for connecting to the cartridge 10. Also, the remanufacturing apparatus 200 is connected to a network N1.

The network N1 may be the Internet, a cloud network, a private network, or any combination thereof.

The management server 300 is a server apparatus for managing the remanufacturing of the cartridge 10. Typically, the management server 300 is operated by the manufacturer of the printer 100 (or a third party commissioned by the manufacturer). For example, the management server 300 may be implemented as a web server, a cloud server, or an application server using a high-performance information processing apparatus. The management server 300 is connected to the network N1. The remanufacturing apparatus 200 can communicate with the management server 300 via the network N1.

<1-2. Cartridge Overview>

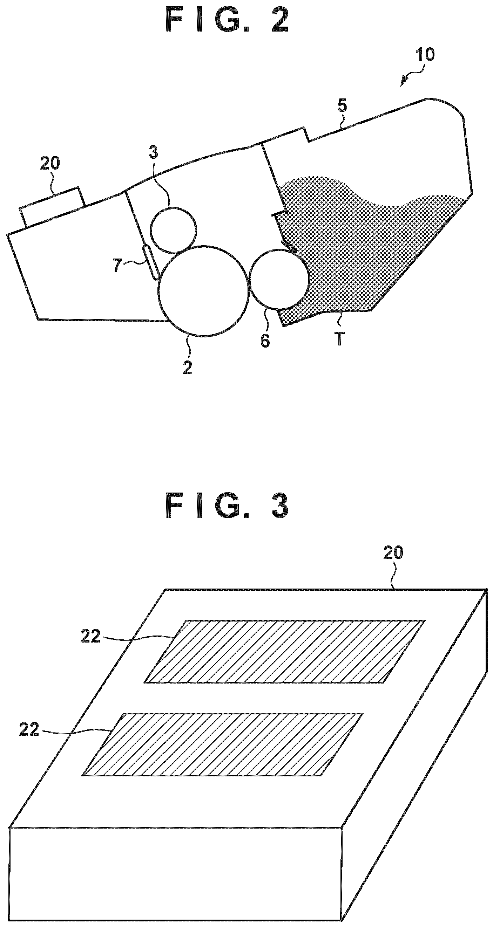

Fig. 2 is a schematic cross-sectional view illustrating an example of the physical configuration of the inside of the cartridge 10. As illustrated in Fig. 2, the cartridge 10 includes a photosensitive body 2, a charging roller 3, a toner container 5, a developing roller 6, a cleaner 7, and a cartridge memory 20. The photosensitive body 2, the charging roller 3, the developing roller 6, and the cleaner 7 are members driven by the printer 100 in the image-forming operation of the printer 100. The toner container 5 houses toner T as the development agent. The toner T is supplied to the printer 100 when the printer 100 forms a toner image. The cartridge memory 20 stores identification information of the cartridge 10 and characteristic information indicating the characteristics of the component elements involved with the image-forming operation of the printer 100. The configuration of the information stored by the cartridge memory 20 will be further described below.

Fig. 3 is a schematic perspective view illustrating an example of the external appearance of the cartridge memory 20. As illustrated in Fig. 3, the cartridge memory 20 includes a pair of connection terminals 22. When the cartridge 10 is attached to the printer 100, the cartridge memory 20 is electrically connected to the printer 100 via the connection terminals 22.

<1-3. Printer Overview>

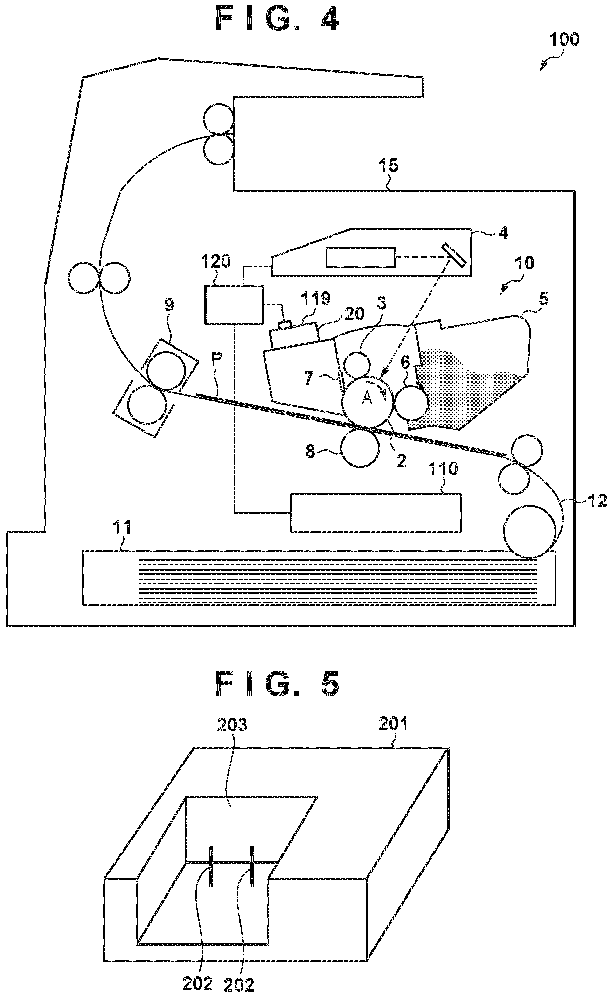

Fig. 4 is a schematic cross-sectional view illustrating an example of the physical configuration of the inside of the printer 100 to which the cartridge 10 is attached. As illustrated in Fig. 4, the printer 100 includes an exposure device 4, a transfer roller 8, a fixing device 9, a cassette 11, a conveying path 12, a discharge tray 15, a controller 110, a connection terminal 119, and an engine control unit 120.

The photosensitive body 2 is an image carrier that is rotationally driven in the direction of arrow A in the image-forming operation. The charging roller 3 is applied with a charging voltage and uniformly charges the surface of the photosensitive body 2. The exposure device 4 forms an electrostatic latent image on the surface of the photosensitive body 2 by exposing the surface of the photosensitive body 2 to laser light according to input image data from the engine control unit 120. The developing roller 6 is applied with a development voltage, develops the electrostatic latent image by the toner T housed in the toner container 5 being supplied to the photosensitive body 2, and forms a toner image on the surface of the photosensitive body 2.

The cassette 11 houses a stack of sheets. In the image-forming operation, the sheets P are fed from the stack of sheets in the cassette 11 one at a time to the conveying path 12. The sheet P is conveyed along the conveying path 12 by a plurality of conveyance rollers and reaches a transfer position where the transfer roller 8 is arranged. The transfer roller 8 is applied with a transfer voltage and transfers the toner image formed on the surface of the photosensitive body 2 onto the sheet P. The cleaner 7 removes the toner remaining on the surface of the photosensitive body 2. The fixing device 9 fixes the toner image to the sheet P by heating and pressing the sheet P. After the sheet P passes through the fixing device 9, the sheet P is discharged to the discharge tray 15.

The controller 110 cooperates with the engine control unit 120 and controls the overall operations described above of the printer 100. The engine control unit 120 is connected to the cartridge 10 attached to the printer 100 via the connection terminal 119. The engine control unit 120 controls the image-forming operation of the printer 100 on the basis of the characteristics indicated by the characteristic information read out from the cartridge 10. For example, on the basis of the member characteristic information described below, image forming conditions such as charging voltage, development voltage, transfer voltage, and process speed may be determined. Also, on the basis of the toner characteristic information described below, the remaining amount of toner may be determined. The configuration of the controller 110 and the engine control unit 120 will be described below in more detail.

Note that in the present embodiment, an example in which the cartridge 10 connects to the engine control unit 120 via the connection terminal via a wired connection is mainly described. However, in other embodiments, the cartridge 10 may connect to the engine control unit 120 via an antenna, for example, via a wireless connection. This also applies to the connection between the cartridge 10 and the remanufacturing apparatus 200.

<1-4. Cartridge Remanufacture>

When the printer 100 repeats the image-forming operation, the toner inside the cartridge 10 gradually depletes and the members of the cartridge 10 wear until they have no remaining service life (for example, roller wear). The user detaches the cartridge 10 from the printer 100 and attaches a new cartridge to the printer 100. The spent cartridge 10 is collected by the remanufacturer. In Fig. 1, the cartridge 10 collected by the remanufacturer is indicated by a dashed line.

The remanufacturer, for example, performs the remanufacturing work of replenishing the toner in the cartridge 10 and replacing the worn members. Also, the remanufacturer connects a connection interface 201 of the remanufacturing apparatus 200 to the cartridge 10. Fig. 5 is a schematic perspective view illustrating an example of the external appearance of the connection interface 201. As illustrated in Fig. 5, the connection interface 201 includes a pair of connection terminals 202 arranged in a recess portion 203 where the cartridge memory 20 can be received. When the cartridge memory 20 is set in the recess portion 203, the connection terminals 202 electrically contact the connection terminals 22 of the cartridge memory 20, enabling communication between the remanufacturing apparatus 200 and the cartridge memory 20.

The remanufacturing apparatus 200 obtains information to be written to the cartridge memory 20, such as identification information of the remanufactured cartridge 10, characteristic information representing the characteristics of the component elements of the remanufactured cartridge 10 and the like, on the basis of inputs by the remanufacturer, for example. The remanufacturing apparatus 200 sends a request to the management server 300 to generate a digital signature of the information to be written to the cartridge memory 20 and writes the information together with the digital signature provided from the management server 300 to the cartridge memory 20.

When the cartridge 10 remanufactured in this manner is attached to the printer 100, the printer 100 reads out the identification information and the characteristic information rewritten at the time of remanufacture from the cartridge memory 20 together with the digital signature. Then, when the authenticity of the read information is successfully verified on the basis of the digital signature, the printer 100 can execute image-forming operations using the cartridge 10 with image forming conditions suiting the post-remanufacture characteristics. Note that, naturally, the printer to which the remanufactured cartridge 10 is attached may be actually different from the printer to which the cartridge 10 before remanufacture was attached.

<1-5. Configuration Example of Cartridge Memory>

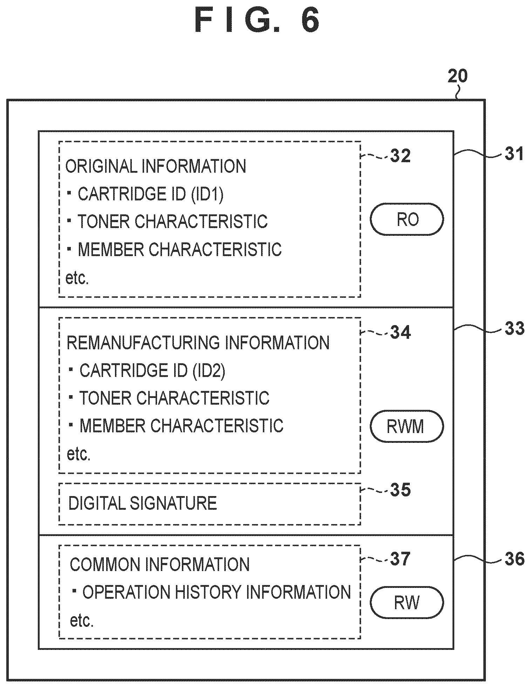

Fig. 6 is an explanatory diagram of an example of the configuration of a storage area of the cartridge memory 20 according to an embodiment. The cartridge memory 20 may be any type of non-volatile memory, such as an electrically erasable programmable read-only memory (EEPROM), for example. As illustrated in Fig. 6, the cartridge memory 20 includes a first storage area 31, a second storage area 33, and a common storage area 36.

The first storage area 31 is an area where first information 32 specific to the cartridge 10 when it is a new product is stored. Hereinafter, the first information 32 is also referred to as original information. In the example of Fig. 6, the original information 32 includes cartridge identification information (ID), toner characteristic information, and member characteristic information. The cartridge ID is information (first identification information, ID1) for identifying the individual cartridge 10 when it is a new product (in other words, before remanufacture). The cartridge ID may be in any format and may be a combination of a manufacture date and a serial number (which is reset each time the date changes). The toner characteristic information is information indicating the characteristics of the toner housed in the cartridge 10. For example, the toner characteristic information may include a parameter representing the color component of the toner housed in the cartridge 10 (for example, "Black"). Also, the toner characteristic information may include a parameter representing the amount (using the number of sheets as the unit, for example, "1000 sheets") of toner replenished into the cartridge 10 at the time of manufacture. The member characteristic information is information representing characteristics of the members constituting the cartridge 10. For example, the member characteristic information may include a parameter representing one or more of an optimal charging voltage, development voltage, and transfer voltage. Note that a part of the cartridge ID may represent the toner characteristics or the member characteristics (for example, a letter of the alphabet at a specific position may represent the toner color or the like). In such a case, the original information may not include independent characteristic information.

The second storage area 33 is an area that stores second information 34 that is similar information to the first information 32 but is rewritten at the time of remanufacture. In the present embodiment, the second information 34 written to the second storage area 33 at the time of the first manufacturing of the cartridge 10 is a duplicate of the first information 32. The second information 34 is rewritten as information specific to the remanufactured cartridge 10 by the remanufacturing apparatus 200 at the time of remanufacturing of the cartridge 10. Hereinafter, the second information 34 is also referred to as remanufacturing information. The remanufacturing information 34 may include the cartridge ID (second identification information, ID2) for identifying the individual remanufactured cartridge 10, toner characteristic information representing the characteristics of the toner after remanufacture, and member characteristic information representing the characteristics of the members after remanufacture.

In the second storage area 33, a digital signature 35 is also stored. The digital signature 35 is used by the printer 100 to verify the authenticity of the second information 34 when the printer 100 reads out and uses the second information 34 from the cartridge memory 20. As described below, the digital signature 35 is generated by the management server 300 on the basis of the first information 32 and the second information 34.

The common storage area 36 is an area where common information 37 may be freely updated before and after remanufacture. In the example of Fig. 6, the common information 37 includes operation history information. The operation history information may include, for example, a parameter representing the cumulative number of sheets printed as a result of execution of image formation jobs. The parameter may be initialized to zero at the time of first manufacture and at the time of remanufacture and may be counted up each time the printer 100 executes an image formation job.

In Fig. 6, the alphabet letter labels illustrated on the right of the first storage area 31, the second storage area 33, and the common storage area 36 indicate whether or not information can be read from and written to the respective storage areas.

Regarding the first storage area 31, after the first information 32 is written at the time of the first manufacture, only reading is allowed. Thus, the label "RO" meaning read-only is indicated at the first storage area 31.

In the present embodiment, regarding the second storage area 33, rewriting the second information 34 and the digital signature 35 is allowed under a certain condition. This condition is that authentication information generated on the basis of at least the second information 34 is received together with the second information 34 and the digital signature 35, and verification of the second information 34 based on the authentication information is successful for the cartridge 10. In this manner, the cartridge 10 itself has the function of guaranteeing validity of information to be written to the cartridge memory 20 so that the risk of the reuse of the remanufactured cartridge 10 causing an inappropriate operation of the printer 100 is reduced. Thus, the label "RWM" meaning conditionally rewritable is indicated at the second storage area 33. The conditional rewriting of the second information 34 will be further described below.

Regarding the common storage area 36, the information can be rewritten at any point in time including at the time of an image-forming operation and at the time of remanufacture. Thus, the label "RW" meaning rewritable is indicated at the common storage area 36.

<2. Cartridge Memory Rewriting>

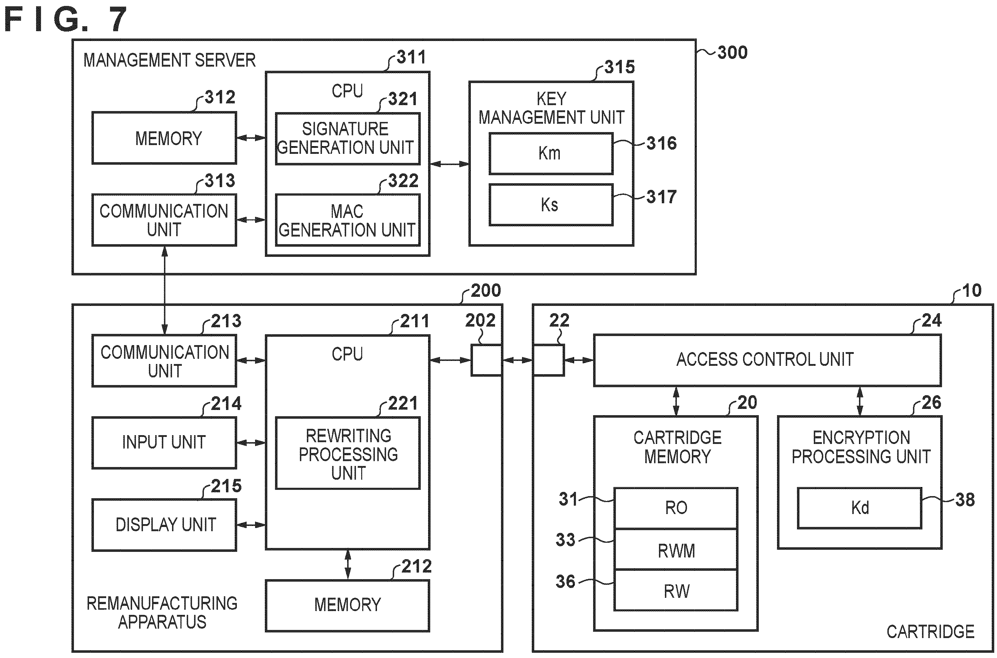

Fig. 7 illustrates an example of the connection relationship between the cartridge 10 when the cartridge 10 is remanufactured by the remanufacturer, the remanufacturing apparatus 200, and the management server 300 and configurations of the respective apparatuses.

<2-1. Configuration of Cartridge>

The cartridge 10 includes the cartridge memory 20, the connection terminals 22, an access control unit 24, and an encryption processing unit 26. The cartridge memory 20 includes at least the read-only first storage area 31 and the rewritable second storage area 33 described using Fig. 6. The connection terminals 22 function as a connection interface for connecting to the remanufacturing apparatus 200 at the time of remanufacturing of the cartridge 10.

The access control unit 24 is control circuitry that controls the reading of information from the cartridge memory 20 and the writing of information to the cartridge memory 20 on the basis of instructions received from the remanufacturing apparatus 200. For example, when the access control unit 24 receives a reading instruction designating a specific address of the cartridge memory 20 from the remanufacturing apparatus 200, the access control unit 24 reads out the information stored at the designated address and transmits the read-out information to the remanufacturing apparatus 200 via the connection terminals 22. Also, when the access control unit 24 receives a writing instruction designating a specific address (write destination address) from the remanufacturing apparatus 200, the access control unit 24 executes different processing depending on which storage area of the cartridge memory 20 the write destination address belongs to.

In a case where the write destination address belongs to the first storage area 31, the access control unit 24 does not allow the information to be written to the write destination address. In a case where the write destination address belongs to the second storage area 33, together with the writing instruction, the access control unit 24 receives authentication information for verifying the information in addition to the information to be written to the write destination address. Then, the access control unit 24 causes the encryption processing unit 26 to verify the information based on the received authentication information, and if verification is successful, the received information is written to the designated write destination address (the information stored at the write destination address is rewritten). In a case where the write destination address belongs to the common storage area 36, the access control unit 24 writes the information included in the writing instruction to the write destination address.

The encryption processing unit 26 is tamper-resistant encryption processing circuitry including processing circuitry that executes various types of encryption processing relating to use and remanufacture of the cartridge 10 and storage circuitry that holds encryption keys required for encryption processing.

In the present embodiment, the authentication constituting the condition for allowing writing of information to the second storage area 33 may be authentication based on message authentication code (MAC). As the algorithm for MAC generation and verification, for example, cipher block chaining-(CBC-)MAC, cipher-based MAC (CMAC), parallelizable MAC (PMAC), or any known algorithm may be used.

The manufacturer of the cartridge 10, when manufacturing the cartridge 10, derives a derived key ($K_d$) according to the following Expression (1) on the basis of the first identification information (ID1) for identifying the cartridge 10 and a master key ($K_m$).

$$K_d = F1 (K_m, ID1) \qquad\qquad (1)$$

In Expression (1), the function F1 () may be any one-way function. For example, the function F1 () may be a cryptographic hash function that outputs a hash value of the concatenate of $K_m$ and ID1 ($K_m \parallel$ ID1). As the cryptographic hash function, for example, SHA256 defined as FIPS PUB 180-4 by the National Institute of Standards and Technology (NIST) may be used. As another example, the function F1 () may be a function expressing an algorithm for encrypting ID1 using the key value $K_m$ as a common key. As such an encryption algorithm, advanced encryption standard (AES), which is a type of block encryption defined as FIPS PUB 197 by NIST, may be used.

The master key $K_m$ used in deriving the derived key $K_d$ is managed in secret by the management server 300. Also, the derived key $K_d$ is stored as an encryption key 38 in the encryption processing unit 26 of the cartridge 10. When the encryption processing unit 26 is requested to verify a message (information to be written to the second storage area 33, for example) based on MAC from the access control unit 24, the encryption processing unit 26 compares the MAC for verification derived using the derived key $K_d$ from the input message with the input MAC. Then, in a case where the two MACs match, the encryption processing unit 26 outputs a verification result indicating that the message is authentic to the access control unit 24 (in other words, verification is successful). On the other hand, in a case where the two MACs do not match, the encryption processing unit 26 outputs a verification result indicating that the message is not authentic to the access control unit 24 (in other words, verification fails).

When the encryption processing unit 26 is requested to generate a MAC from the access control unit 24, the encryption processing unit 26 outputs a MAC derived using the derived key $K_d$ from the input message to the access control unit 24. For example, MAC generation by the encryption processing unit 26 may be used in challenge response authentication described below that is executed when the cartridge 10 is attached to the printer 100.

<2-2. Configuration of Remanufacturing Apparatus>

The remanufacturing apparatus 200 includes the connection terminals 202, a central processing unit (CPU) 211, a memory 212, a communication unit 213, an input unit 214, and a display unit 215. The connection terminals 202 function as the connection interface for receiving a connection with the cartridge 10 at the time of remanufacturing of the cartridge 10.

The CPU 211 is control circuitry that controls the overall operations of the remanufacturing apparatus 200 by executing a computer program. The memory 212 stores the computer program executed by the CPU 211. The communication unit 213 is a communication interface for the remanufacturing apparatus 200 to communicate with the management server 300 via the network N1. The input unit 214 is an input device for the remanufacturing apparatus 200 to accept user inputs. The display unit 215 is a display for displaying information to the user of the remanufacturing apparatus.

In the present embodiment, the CPU 211 functions as a rewriting processing unit 221 that rewrites information stored in the cartridge memory 20 at the time of remanufacturing of the cartridge 10. A flow of rewriting processing executed by the rewriting processing unit 221 will be further described below.

<2-3. Configuration of Management Server>

The management server 300 includes a CPU 311, a memory 312, a communication unit 313, and a key management unit 315.

The CPU 311 is control circuitry that controls the overall operations of the management server 300 by executing a computer program. The memory 312 stores the computer program executed by the CPU 311. The communication unit 313 is a communication interface for the management server 300 to communicate with other apparatuses via the network N1. The key management unit 315 manages the encryption keys required for guaranteeing appropriate use of the printer 100 and the cartridge 10 in the cartridge authentication system 1. In the example of Fig. 7, the key management unit 315 stores the master key $K_m$ used for deriving the derived key $K_d$ at the time of manufacture of the cartridge 10 and a private key $K_s$ used to generate a digital signature. Though not illustrated in Fig. 7, the management server 300 may further include an input device for accepting user inputs and a display for displaying information.

In the present embodiment, at the time of remanufacturing of the cartridge 10, the CPU 311 functions as a signature generation unit 321 that generates a digital signature in response to a request from the remanufacturing apparatus 200 and a MAC generation unit 322 that generates a MAC for a designated message. The roles of the signature generation unit 321 and the MAC generation unit 322 in rewriting processing will be further described below.

<2-4. Rewriting Processing>

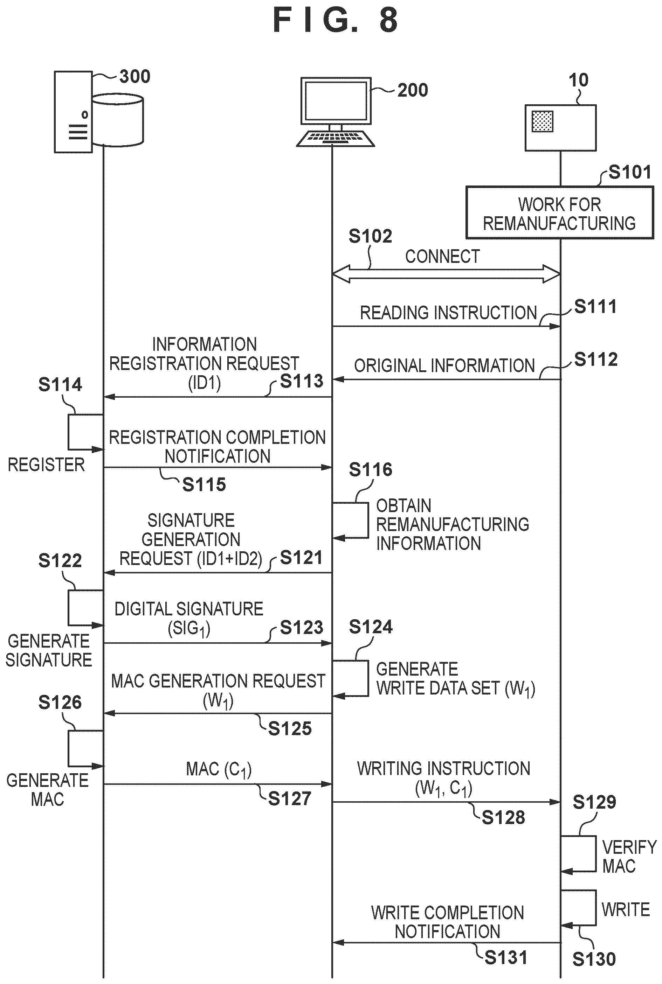

Fig. 8 is a sequence diagram illustrating an example of the flow of the rewriting processing executed at the time of remanufacturing of the cartridge 10. The cartridge 10, the remanufacturing apparatus 200, and the management server 300 are mainly involved in the rewriting processing illustrated in Fig. 8. Note that in the following description, processing step is abbreviated to "S".

Before the rewriting processing, in S101, the remanufacturer performs remanufacturing work including replenishing the toner and replacing worn members in the cartridge 10. When this work is complete, in S102, the remanufacturer connects the cartridge 10 to the connection interface 201 of the remanufacturing apparatus 200. Thereafter, when the CPU 211 of the remanufacturing apparatus 200 runs the computer program for rewriting, the rewriting processing is started by the rewriting processing unit 221.

In S111, the rewriting processing unit 221 transmits to the cartridge 10 a reading instruction for reading out the original information stored in the first storage area 31 of the cartridge memory 20. In S112, the access control unit 24 of the cartridge 10 transmits to the remanufacturing apparatus 200 the original information read out from the first storage area 31. The original information includes the first identification information (ID1), for example.

Next, in S113, the rewriting processing unit 221 transmits to the management server 300 an information registration request including the first identification information received from the cartridge 10. In S114, the MAC generation unit 322 of the management server 300 registers the first identification information received from the remanufacturing apparatus 200 in the memory 312 for use in the subsequent MAC generation. In S115, the MAC generation unit 322 notifies the remanufacturing apparatus 200 that registration of the first identification information is complete.

Next, in S116, the rewriting processing unit 221 obtains remanufacturing information for the remanufactured cartridge 10. For example, the remanufacturing information includes the second identification information (ID2) determined by the remanufacturer and characteristic information indicating the toner and member characteristics of the remanufactured cartridge 10. The remanufacturing information may be received via a user interface provided by the input unit 214 and the display unit 215 of the remanufacturing apparatus 200 or may be received (in a data file format, for example) via the communication unit 213 from a certain external apparatus.

Next, in S121, the rewriting processing unit 221 transmits to the management server 300 a signature generation request requesting for generation of a digital signature based on the original information and the remanufacturing information. In S122, in response to to the signature generation request, the signature generation unit 321 of the management server 300 uses the private key $K_s$ stored in the key management unit 315 to generate a digital signature $SIG_1$ based on the original information and the remanufacturing information. The digital signature may be generated according to any known signature generation method such as a digital signature algorithm (DSA) method or an elliptic curve DSA (ECDSA) method, for example. In S123, the signature generation unit 321 transmits the generated digital signature $SIG_1$ to the remanufacturing apparatus 200.

Next, in S124, the rewriting processing unit 221 generates a write data set $W_1$ for writing the remanufacturing information to the cartridge memory 20. For example, the write data set $W_1$ may include one or more of the following:

- · Remanufacturing information

  - Second identification information
  - Toner characteristic information
  - Member characteristic information

- · Digital signature
- · Write destination address

Next, in S125, the rewriting processing unit 221 transmits to the management server 300 a MAC generation request requesting for generation of a message authentication code with the write data set $W_1$ as the message. In S126, the MAC generation unit 322 derives the derived key $K_d$ (first derived key) according to Expression (1) from the master key $K_m$ and the first identification information ID1 registered in S114 and uses the derived derived key $K_d$ to generate a message authentication code $C_1$ based on the write data set $W_1$. In S127, the MAC generation unit 322 transmits the generated message authentication code $C_1$ to the remanufacturing apparatus 200.

Next, in S128, the rewriting processing unit 221 transmits to the cartridge 10 a writing instruction including the write data set $W_1$ and the message authentication code $C_1$. In S129, the access control unit 24 of the cartridge 10 causes the encryption processing unit 26 to verify the write data set $W_1$ based on the message authentication code $C_1$ received from the remanufacturing apparatus 200. The encryption processing unit 26 uses the prestored derived key $K_d$ (second derived key) 38 to derive a message authentication code for verification $C_v$ from the write data set $W_1$ and determines whether or not the derived code $C_v$ matches the message authentication code $C_1$. In this example, it is assumed that the two message authentication codes $C_1$ and $C_v$ match and thus verification is successful. In response to verification success, in S130, the access control unit 24 writes the remanufacturing information and the digital signature $SIG_1$ to the designated write destination address of the cartridge memory 20. Then, in S131, the access control unit 24 notifies the remanufacturing apparatus 200 of write completion.

Note that the processing steps illustrated in Fig. 8 may be executed in an order other than the illustrated order. This also applies to the processing steps illustrated in other sequence diagrams. For example, the obtaining of the remanufacturing information in S116 may be performed at any point in time earlier than the signature generation request to the management server 300 in S121.

In the rewriting processing described above, at the time of remanufacturing of the cartridge 10, the digital signature generated on the basis of not only the remanufacturing information to be rewritten in the second storage area 33 but also the original information in the read-only first storage area 31 is written to the second storage area 33. The original information is information specific to the cartridge 10 that is determined and written to the first storage area 31 by the manufacturer of the cartridge 10 at the time of the first manufacturing. Thus, the digital signature used in the verification of the remanufacturing information when the cartridge 10 is attached to the printer 100 and used is different for each cartridge 10. This can suppress unrightful remanufacturing of the cartridge 10 via duplication or analysis of the remanufacturing information and digital signature between different cartridges.

Also, in the rewriting processing described above, the cartridge 10 receives authentication information generated on the basis of at least the remanufacturing information together with the remanufacturing information and the digital signature from the remanufacturing apparatus 200. In a case where the verification of the remanufacturing information based on the received authentication information is successful, the access control unit 24 of the cartridge 10 allows the remanufacturing information and the digital signature to be written to the second storage area 33. In this manner, by having a function that guarantees validity of data writing in the cartridge itself, it is made difficult for a malicious third party to write inappropriate data to the cartridge memory 20. Thus, the risk that the reuse of the remanufactured cartridge 10 causes an inappropriate operation of the printer 100 is reduced.

Also, the authentication information described above is generated by the management server 300 using the derived key $K_d$ derived from the master key $K_m$ which is different from encryption keys used in generation and verification of the digital signature (private key and public key). The master key $K_m$ and the derived key $K_d$ are not stored in the printer 100. Thus, even if a third party analyzes the printer 100, the encryption key required for generating the authentication information will never be leaked. In other words, only the remanufacturing apparatus 200 with valid permission to communicate with the management server 300 can write the remanufacturing information to the cartridge 10.

Also, the authentication information may be generated on the basis of the remanufacturing information as well as the digital signature of the remanufacturing information and, in this case, it will be more difficult for a third party without the private key for generating the digital signature to write inappropriate data to the cartridge memory 20. The authentication information may be generated further on the basis of the write destination address of the remanufacturing information and, in this case, the cartridge memory 20 can be protected from such an attack that the attacker tries to tamper with the write destination address of a write command and write data to an inappropriate storage area.

<2-5. Example of Contents of Memory before and after Rewriting>

Table 1 below illustrates an example of the information stored in the cartridge memory 20 before and after rewriting at the time of remanufacture. The left-most column of Table 1 indicates examples of address numbers of predetermined addresses where information is written. The second column from the left indicates the parameter names of the information. The third and fourth column from the left indicate examples of values before and after the parameters are rewritten.

Table 1

Table 1. An example of the information stored before and after rewriting

| Address | Parameter Name | Value (Before Remanufacture) | Value (After Remanufacture) |
|---------|----------------|------------------------------|------------------------------|
| First Storage Area (RO) | | | |
| 01h | Manufacture Date | 2024/1/31 | 2024/1/31 |
| 02h | Serial Number | 0005 | 0005 |
| 03h | Toner Color | Black | Black |
| 04h | Number of Printable Sheets | 1000 | 1000 |
| 05h | Development Voltage | 280 V | 280 V |
| : | : | : | : |
| Second Storage Area (RWM) | | | |
| 11h | Manufacture Date | 2024/1/31 | 2024/7/31 |
| 12h | Serial Number | 0005 | 0001 |
| 13h | Toner Color | Black | Black |
| 14h | Number of Printable Sheets | 1000 | 800 |

(continued)

| Second Storage Area (RWM) | | | |
|---|---|---|---|
| 15h | Development Voltage | 280 V | 300 V |
| : | : | : | : |
| 21h | Digital Signature | $Sig_0$ | $Sig_1$ |
| : | : | : | : |
| Common Storage Area (RW) | | | |
| 41h | Number of Printed Sheets | 980 | 0 |
| : | : | : | : |

In the example of Table 1, individual cartridges 10 can be identified by a combination of "Manufacture Date" and "Serial Number". In other words, each individual cartridge manufactured on the same manufacture date is distinguished via the serial number, and the serial number may be reset when the date changes. Such identification information may be used for troubleshooting when a problem occurs involving the use of the cartridge 10.

"Toner Color" and "Number of Printable Sheets" are examples of toner characteristic information. In a case where the cartridge 10 houses toner of only one type of color, "Toner Color" represents that one type of color. In the case of using a cartridge housing toner of four types of colors (for example, yellow, magenta, cyan, and black), "Toner Color" may represent the combination of the four types of colors. "Number of Printable Sheets" may be determined according to the amount of toner replenished in the cartridge 10. "Number of Printable Sheets" may be used for estimating the remaining amount of toner after the cartridge 10 has started being used. "Development Voltage" is an example of member characteristic information.

Before remanufacture, duplicates of the first identification information, the toner characteristic information, and the member characteristic information stored in the first storage area 31 are stored in the second storage area 33. At the time of remanufacture, the information inside the first storage area 31 is not updated, and the information inside the second storage area 33 is rewritten to information for the cartridge 10 after remanufacture. For example, "Number of Printable Sheets" is rewritten from 1000 sheets to 800 sheets because of a difference between the amount of replenished toner and the original amount. "Development Voltage" is also rewritten from 280 V to 300 V according to the replacement of the developing roller 6, for example.

Before remanufacture, "Number of Printed Sheets" stored in the common storage area 36 indicates 980 sheets, a value close to the value of "Number of Printable Sheets". At the time of remanufacture, this value is reset to zero. When reuse of the remanufactured cartridge 10 is started, "Number of Printed Sheets" may again be counted up.

In this manner, as a result of the original information being duplicated and stored in the second storage area 33 at the time of manufacture of the cartridge 10, the printer 100 to which the cartridge 10 is attached does not need to switch an address to be referred to depending on a remanufacturing status of the cartridge 10 (whether it is a new product of not). In other words, regardless of whether the cartridge 10 is a new product or a remanufactured product, the printer 100 can always read out identification information and characteristic information suitable for the status of the cartridge 10 from the same address of the second storage area 33. Accordingly, the complexity of implementation of the control function of the printer 100 can be reduced.

Note that the configuration of the information, the parameter names, and the values indicated in Table 1 are merely examples to facilitate description. One or more of the parameters described above may be omitted, and additional parameters may be used. For example, the identification information for identifying cartridges may include an identifier for identifying the manufacturer or remanufacturer of the cartridge. Also, the toner characteristic information may include a remaining amount warning threshold for warning a user that the remaining amount of toner is low.

<3. Use of Cartridge in Printer>

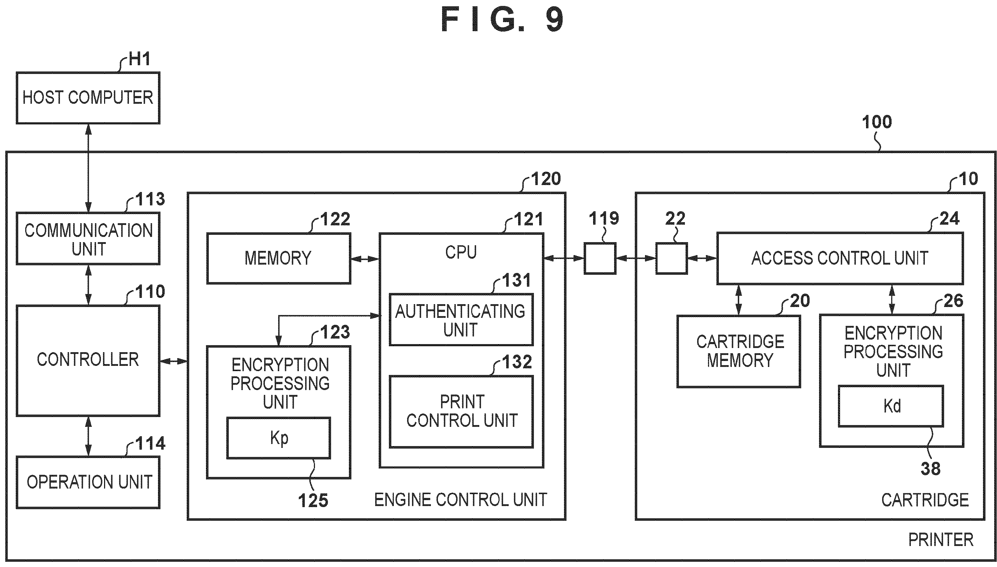

Fig. 9 illustrates an example of the configuration relating to the control function of the printer 100 to which the cartridge 10 is attached.

<3-1. Printer Configuration>

In the example of Fig. 9, the printer 100, in addition to the cartridge 10, includes the controller 110, a communication unit 113, an operation unit 114, and the engine control unit 120.

The controller 110 includes, for example, a CPU and a memory and controls the overall operations of the printer 100 by executing a computer program stored in the memory. The communication unit 113 is a communication interface for the printer 100 to communicate with other apparatuses via the network N1. The operation unit 114 provides a user interface to the user of the printer 100. The operation unit 114 may include, for example, an input device such as a touch panel, a button, and a switch and an output device such as a display and a speaker. The controller 110 causes the engine control unit 120 to execute an image formation job (for example, a print job or a copy job) received from an external apparatus such as a host computer H1 or accepted via the operation unit 114.

The engine control unit 120 includes a CPU 121, a memory 122, and an encryption processing unit 123. The CPU 121 functions as an authenticating unit 131 and a print control unit 132 by executing a computer program stored in the memory 122. The authenticating unit 131 executes cartridge authentication processing for confirming authenticity of the cartridge 10 when the cartridge 10 is attached to the printer 100. As described using Fig. 4, when instructed to execute a job by the controller 110, the print control unit 132 controls the units of the printer 100 under the image forming conditions determined on the basis of the information read out from the cartridge memory 20 to form an image on a sheet. The cartridge authentication processing executed by the authenticating unit 131 and the job control processing executed by the print control unit 132 will be further described below.

The encryption processing unit 123 is tamper-resistant encryption processing circuitry including processing circuitry that executes various types of encryption processing relating to authentication of the cartridge 10 and storage circuitry that holds encryption keys required for encryption processing. In the present embodiment, the encryption processing unit 123 pre-stores a public key $K_p$ corresponding to the private key $K_s$ managed by the key management unit 315 of the management server 300 (the private key $K_s$ and the public key $K_p$ constituting a key pair for a public key encryption method). The public key $K_p$ is used for verifying the digital signature read out from the cartridge memory 20.

When the cartridge 10 is attached to the printer 100, in addition to verifying the digital signature, challenge response authentication for confirming mutual authenticity may be performed. The encryption processing unit 26 of the cartridge 10 and the encryption processing unit 123 of the printer 100 may have functions for storing encryption keys and passwords for challenge response authentication, generating a response based on a challenge, and verifying a response sent back from a counterpart. As the encryption key for challenge response authentication, the encryption processing unit 26 of the cartridge 10 may use the derived key $K_d$ described above. In this case, the encryption processing unit 123 of the printer 100 may pre-store the master key $K_m$ and derive the derived key $K_d$ on the basis of the first identification information ID1 received from the cartridge 10 and the master key $K_m$.

<3-2. Cartridge Authentication Processing>

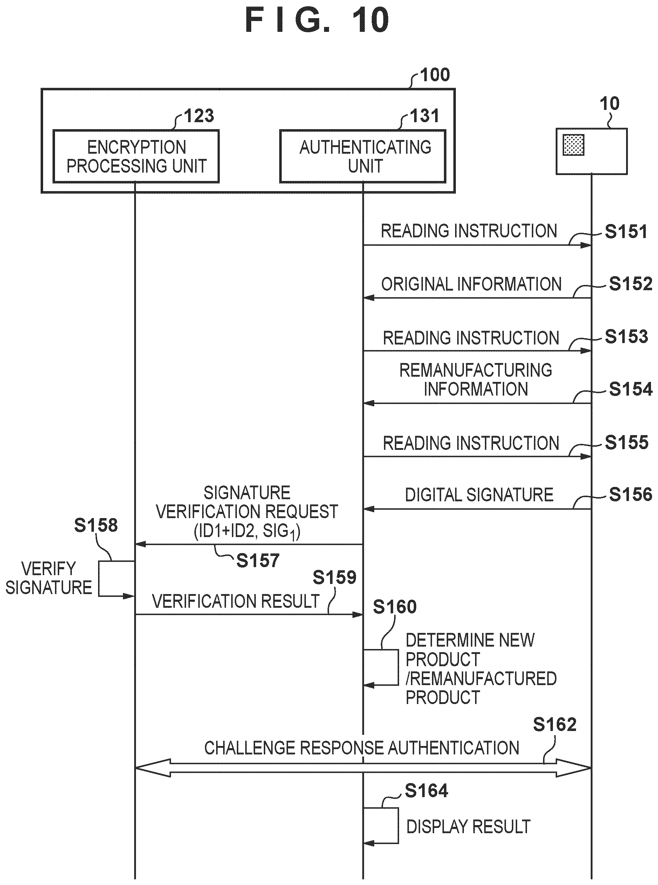

Fig. 10 is a sequence diagram illustrating an example of a flow of the cartridge authentication processing executed by the printer 100 when the cartridge 10 is attached to the printer 100. The cartridge 10 and the encryption processing unit 123 and the authenticating unit 131 of the printer 100 are mainly involved in the cartridge authentication processing illustrated in Fig. 10.

First, in S151, the authenticating unit 131 transmits to the cartridge 10 a reading instruction for reading out the original information stored in the first storage area 31 of the cartridge memory 20. In S152, the access control unit 24 of the cartridge 10 transmits to the printer 100 the original information read out from the first storage area 31. The original information includes the first identification information (ID1), for example.

Next, in S153, the authenticating unit 131 transmits to the cartridge 10 a reading instruction for reading out the remanufacturing information stored in the second storage area 33 of the cartridge memory 20. In S154, the access control unit 24 of the cartridge 10 transmits to the printer 100 the remanufacturing information read out from the second storage area 33. The remanufacturing information includes the second identification information (ID2), for example.

Next, in S155, the authenticating unit 131 transmits to the cartridge 10 a reading instruction for reading out the digital signature stored in the second storage area 33 of the cartridge memory 20. In S156, the access control unit 24 of the cartridge 10 transmits to the printer 100 the digital signature read out from the second storage area 33.

Next, in S157, the authenticating unit 131 outputs to the encryption processing unit 123 the original information, the remanufacturing information, and the digital signature received from the cartridge 10 and requests the encryption processing unit 123 to perform signature verification. In S158, the encryption processing unit 123 performs signature verification using the prestored public key $K_p$. Specifically, in a case where the hash value derived from the original information and the remanufacturing information matches the hash value obtained by decrypting the digital signature with the public key $K_p$, the encryption processing unit 123 determines that the signature verification is successful (in other words, the original information and the remanufacturing information are authentic). In a case where the two hash values do not match, the encryption processing unit 123 determines that the signature verification is unsuccessful. In S159, the encryption processing unit 123 outputs the verification result to the authenticating unit 131. In a case where the signature verification is unsuccessful, the authenticating unit 131 may skip the subsequent processing steps S160 and S162. Herein, it is assumed that the signature verification is successful.

Next, in S160, the authenticating unit 131 determines whether the cartridge 10 is a new product or whether it has been remanufactured (a remanufactured product) on the basis of the first identification information and the second identification information. For example, in a case where the second identification information is the same as the first identification information, the authenticating unit 131 determines that the cartridge 10 is a new product. On the other hand, in a case where the second identification information is not the same as the first identification information, the authenticating unit 131 determines that the cartridge 10 is a remanufactured product.

Next, in S162, the authenticating unit 131 additionally performs challenge response authentication with the access control unit 24 of the cartridge 10. The challenge response authentication here may be performed according to any known method, and the flow will not be described here in detail.

Next, in S164, the authenticating unit 131 displays the result of the digital signature verification, the new product or remanufactured product determination, and the challenge response authentication on the screen of the operation unit 114. In a case where the signature verification or the challenge response authentication fails, a warning to the user may be displayed on the screen. In a case where the signature verification or the challenge response authentication fails, the authenticating unit 131 may prohibit the use of the cartridge 10, and if the user who received the warning selects to continue to use the cartridge 10, use of the cartridge 10 may be allowed.

The authenticating unit 131 stores the result of the cartridge authentication processing described above in internal memory. When the cartridge 10 is temporarily detached from and then reattached to the printer 100, the authenticating unit 131 may execute the cartridge authentication processing again.

Note that the new product or remanufactured product determination in S160 may be performed at any point in time after the remanufacturing information is read out in S154.

<3-3. Job Control Processing>

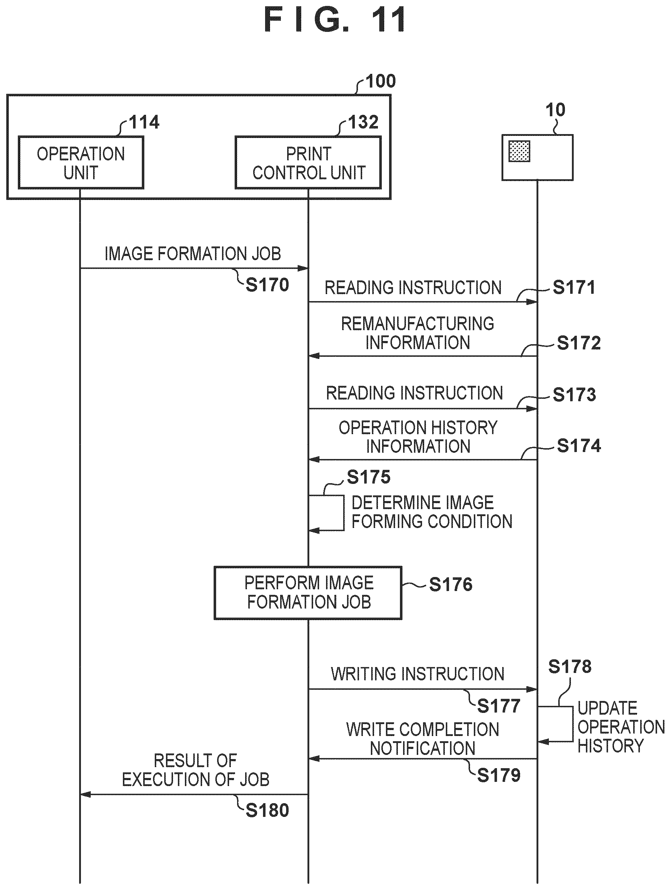

Fig. 11 is a sequence diagram illustrating an example of a flow of the job control processing executed by the printer 100. The cartridge 10 and the operation unit 114 and the print control unit 132 of the printer 100 are mainly involved in the job control processing illustrated in Fig. 11.

First, in S170, the operation unit 114 outputs to the print control unit 132 an image formation job accepted from the user together with job settings information, such as the number of copies to print and the sheet size, and input image data.

In S171, the print control unit 132 transmits to the cartridge 10 a reading instruction for reading the remanufacturing information stored in the second storage area 33 of the cartridge memory 20 regardless of whether the cartridge 10 is a new product or a remanufactured product. In S172, the access control unit 24 of the cartridge 10 transmits to the printer 100 the remanufacturing information read out from the second storage area 33. In a case where the cartridge 10 is a new product, the remanufacturing information is a duplicate of the original information.

Next, in S173, the print control unit 132 transmits to the cartridge 10 a reading instruction for reading the operation history information stored in the common storage area 36 of the cartridge memory 20. In S174, the access control unit 24 of the cartridge 10 transmits to the printer 100 the operation history information read out from the common storage area 36.

Next, in S175, the print control unit 132 determines the image forming condition (for example, development voltage) on the basis of the characteristic information included in the remanufacturing information received from the cartridge 10. Here, the print control unit 132 may estimate the remaining amount of toner from the ratio of spent toner amount (number of printed sheets indicated by the operation history information) to the toner capacity (number of printable sheets indicated by the toner characteristic information) and may notify the user of the remaining amount of toner on the screen of the operation unit 114. Next, in S176, the print control unit 132 controls the units of the printer 100 to form an image on a sheet according to the image forming condition determined in S175.

Next, in S177, a writing instruction for updating the operation history information in the common storage area 36 of the cartridge memory 20 is transmitted to the cartridge 10. The writing instruction here may, for example, indicate the number of printed sheets obtained by adding an increase amount due to the execution of the image formation job in S176 to the number of sheets printed indicated by the operation history information read out in S174. In S178, the access control unit 24 of the cartridge 10 updates the operation history information inside the common storage area 36 according to the writing instruction (for example, writing a new value for the number of printed sheets to a designated write destination address). Then, in S179, the access control unit 24 notifies the printer 100 that writing is complete.

Next, in S180, the print control unit 132 displays the result of the execution of the image formation job on the screen of the operation unit 114.

In a case where the cartridge 10 is a remanufactured product, the remanufacturing information read out from the cartridge memory 20 in S172 is information written to the cartridge memory 20 after successful verification based on the authentication information at the time of remanufacture. In addition, it has already been confirmed by the signature verification in the cartridge authentication processing described above that there has been no tampering between when the cartridge 10 was remanufactured to when the cartridge 10 was attached to the printer 100. Accordingly, the printer 100 can safely execute the image formation job according to the image forming condition based on appropriate toner characteristic information and member characteristic information written to the cartridge memory 20 by the authentic remanufacturer.

<4. Modification Example>

In the embodiment described above, in a case where the cartridge 10 is remanufactured two or more times, remanufacturing information suitable for characteristics of the component elements of the cartridge 10 after remanufacture is written to the same second storage area 33 of the cartridge memory 20 each time. Alternatively, in a modification example, the cartridge memory 20 may include a plurality of the second storage areas 33 where the remanufacturing information is to be written. In the present section, such a modification example will be described.

<4-1. Configuration Example of Cartridge Memory>

In the present modified example, the cartridge memory 20 of the cartridge 10 includes the read-only first storage area 31 and N rewritable second storage areas 33_1 to 33_N (N being an integer greater than one). The manufacturer of the cartridge 10 writes the first information (original information) specific to the cartridge 10 to the first storage area 31 in advance. In the N second storage areas 33_1 to 33_N, duplicates of the first information may be written. At the time of the n-th (n = 1, ..., N) remanufacture, the rewriting processing unit 221 of the remanufacturing apparatus 200 writes the second information (remanufacturing information) to be read out and used by the printer 100 after the n-th remanufacture and the corresponding digital signature to the n-th second storage area 33_n. The access control unit 24 of the cartridge 10 allows writing to each second storage area 33_n with a condition as in the embodiment described above. This condition is that authentication information generated on the basis of at least the second information is received together with the second information and the digital signature, and verification of the second information based on the authentication information is successful for the cartridge 10. The authenticating unit 131 of the printer 100 to which the cartridge 10 is attached may determine how many times the cartridge 10 has been remanufactured on the basis of comparison between pieces of the identification information stored in the respective storage areas. Then, in a case where the authenticating unit 131 determines that remanufacture has been performed n times, the second information read out from the n-th second storage area 33_n and the corresponding digital signature are used in the cartridge authentication described above.

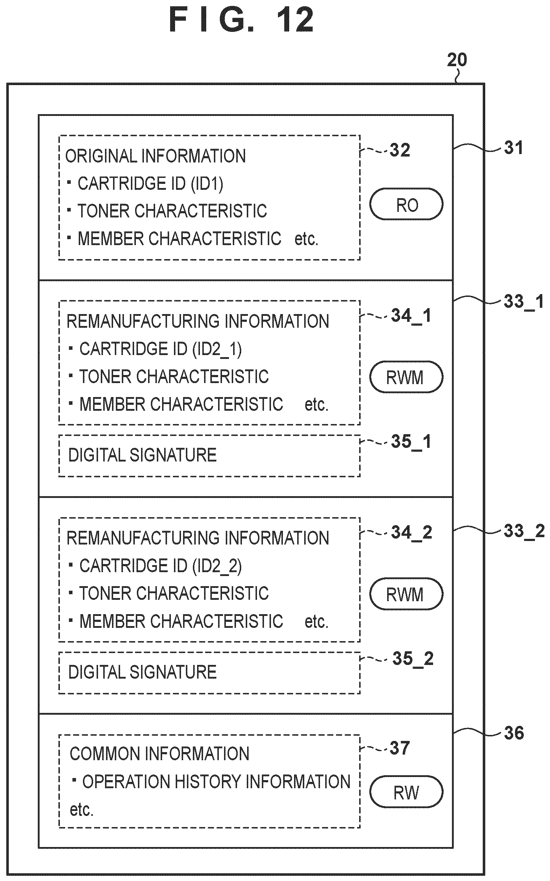

Fig. 12 is an explanatory diagram of an example of the configuration of a storage area of the cartridge memory 20 according to the present modification example. In this example, N equals 2. As illustrated in Fig. 12, the cartridge memory 20 includes the first storage area 31, two second storage areas 33_1 and 33_2, and the common storage area 36.

The second storage area 33_1 is an area that stores the second information 34_1 to be rewritten at the time of the first remanufacture. At the time when the cartridge 10 is first manufactured, the second information 34_1 written to the second storage area 33_1 may be a duplicate of the first information 32. The second information 34_1 is rewritten as information specific to the remanufactured cartridge 10 by the remanufacturing apparatus 200 when the cartridge 10 is remanufactured the first time. The second information 34_1 may be the cartridge ID (second identification information ID2_1) of the cartridge 10 after the first remanufacture, the toner characteristic information, and the member characteristic information.

In the second storage area 33_1, the digital signature 35_1 is also stored. The digital signature 35_1 is used by the printer 100 to verify the second information 34_1 when the printer 100 reads out and uses the second information 34_1 from the cartridge memory 20. The digital signature 35_1 is generated by the management server 300 on the basis of the first information 32 and the second information 34_1.

The second storage area 33_2 is an area that stores the second information 34_2 to be rewritten at the time of the second remanufacture. At the time when the cartridge 10 is first manufactured, the second information 34_2 written to the second storage area 33_2 may be a duplicate of the first information 32. The second information 34_2 is rewritten as information specific to the remanufactured cartridge 10 by the remanufacturing apparatus 200 when the cartridge 10 is remanufactured the second time. The second information 34_2 may be the cartridge ID (second identification information ID2_2) of the cartridge 10 after the second remanufacture, the toner characteristic information, and the member characteristic information.

In the second storage area 33_2, the digital signature 35_2 is also stored. The digital signature 35_2 is used by the printer 100 to verify the second information 34_2 when the printer 100 reads out and uses the second information 34_2 from the cartridge memory 20. The digital signature 35_2 is generated by the management server 300 on the basis of the first information 32 and the second information 34_2.

In Fig. 12, the label "RWM" meaning conditionally rewritable is indicated at the second storage areas 33_1 and 33_2.

<4-2. Rewriting Processing>

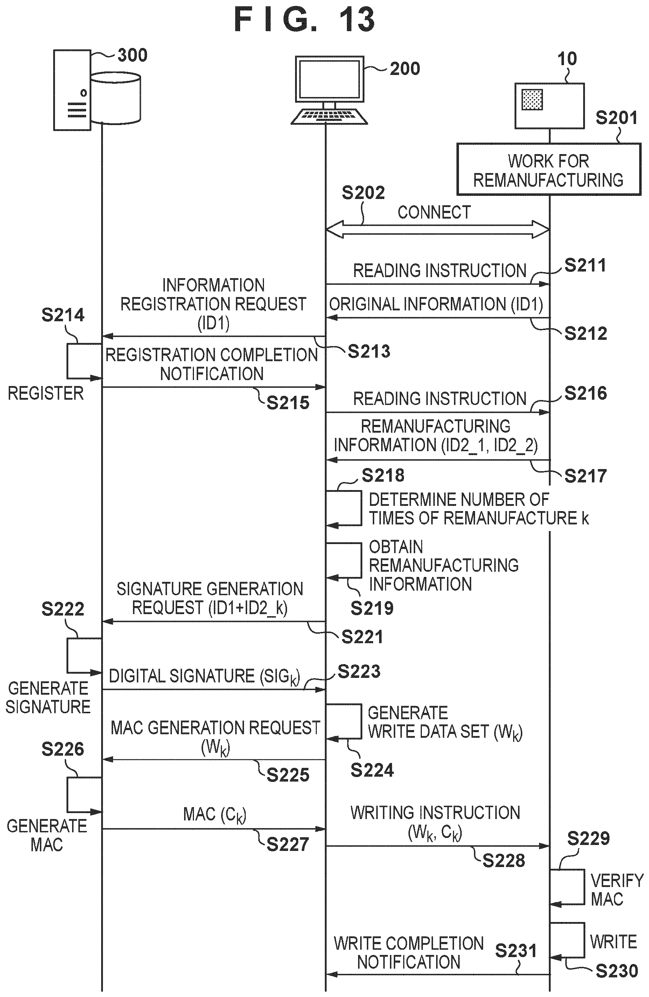

Fig. 13 is a sequence diagram illustrating an example of a flow of the rewriting processing executed at the time of remanufacturing of the cartridge 10. The cartridge 10, the remanufacturing apparatus 200, and the management server 300 are mainly involved in the rewriting processing illustrated in Fig. 13.

S201 to S215 of Fig. 13 are similar to the processing steps S101 to S115 of Fig. 8, and thus redundant description of these are omitted.

In S216, the rewriting processing unit 221 transmits to the cartridge 10 a reading instruction for reading out the remanufacturing information stored in the second storage areas 33_1 and 33_2 of the cartridge memory 20. In S217, the access control unit 24 of the cartridge 10 transmits to the remanufacturing apparatus 200 the remanufacturing information read out from the second storage areas 33_1 and 33_2. The remanufacturing information read out here includes two pieces of the second identification information (ID2_1 and ID2_2), for example.

Next, in S218, the rewriting processing unit 221 of the remanufacturing apparatus 200 determines the number of times of remanufacture the current remanufacture corresponds to by comparing the first identification information (ID1) to the two pieces of the second identification information (ID2_1 and ID2_2). For example, in a case where ID1 = ID2_1 = ID2_2, the current remanufacture corresponds to the first remanufacture. For example, in a case where ID1 $\neq$ ID2_1 and ID1 = ID2_2, the current remanufacture corresponds to the second remanufacture. In a case where ID1 $\neq$ ID2_1 and ID1 $\neq$ ID2_2, the current remanufacture may correspond to the third remanufacture, but remanufacture of a number greater than an upper limit N may be prohibited. In this example, the current remanufacture is determined to be the k-th (k = 1 or 2) remanufacture. Next, in S219, the rewriting processing unit 221 obtains remanufacturing information for the cartridge 10 after the k-th remanufacture.

Next, in S221, the rewriting processing unit 221 transmits to the management server 300 a signature generation request requesting for generation of a digital signature based on the original information (for example, the first identification information ID1) and the remanufacturing information (for example, the second identification information ID2_k). In S222, in response to the signature generation request, the signature generation unit 321 of the management server 300 uses the private key $K_s$ stored in the key management unit 315 to generate a digital signature $SIG_k$ based on the original information and the remanufacturing information. In S223, the signature generation unit 321 transmits the generated digital signature $SIG_k$ to the remanufacturing apparatus 200.

Next, in S224, the rewriting processing unit 221 generates a write data set $W_k$ for writing the remanufacturing information to the cartridge memory 20. For example, the write data set $W_k$ may include one or more of the following:

· Remanufacturing information

- Second identification information (ID2_k)
- Toner characteristic information
- Member characteristic information

· Digital signature ($SIG_k$)
· Write destination address

The write destination address here is different depending on the number k of remanufactures.

Next, in S225, the rewriting processing unit 221 transmits to the management server 300 a MAC generation request requesting for generation of a message authentication code with the write data set $W_k$ as the message. In S226, the MAC generation unit 322 derives the derived key $K_d$ (first derived key) according to Expression (1) from the master key $K_m$ and the first identification information ID1 registered in S214 and uses the derived key $K_d$ to generate a message authentication code $C_k$ based on the write data set $W_k$. In S227, the MAC generation unit 322 transmits the generated message authentication code $C_k$ to the remanufacturing apparatus 200.

Next, in S228, the rewriting processing unit 221 transmits to the cartridge 10 a writing instruction including the write data set $W_k$ and the message authentication code $C_k$. In S229, the access control unit 24 of the cartridge 10 causes the encryption processing unit 26 to verify the write data set $W_k$ based on the message authentication code $C_k$ received from the remanufacturing apparatus 200. Herein, it is assumed that the verification is successful. In response to verification success, in S230, the access control unit 24 writes the remanufacturing information and the digital signature $SIG_k$ to the designated write destination address of the cartridge memory 20. Then, in S231, the access control unit 24 notifies the remanufacturing apparatus 200 of write completion.

<4-3. Example of Contents of Memory before and after Rewriting>

Table 2 below illustrates an example of the information stored in the cartridge memory 20 before and after rewriting at the time of the first remanufacture according to the present modification example.

Table 2

Table 2. An example of the information stored before and after rewriting the first time

| Address | Parameter Name | Value (Before Remanufacture) | Value (After Remanufacture) |
|---|---|---|---|
| First Storage Area (RO) | | | |
| 01h | Manufacture Date | 2024/1/31 | 2024/1/31 |
| 02h | Serial Number | 0005 | 0005 |
| 03h | Toner Color | Black | Black |
| 04h | Number Of Printable Sheets | 1000 | 1000 |
| 05h | Development Voltage | 300 V | 300 V |
| : | : | : | : |
| Second Storage Area (RWM) | | | |
| 11h | Manufacture Date | 2024/1/31 | 2024/7/31 |
| 12h | Serial Number | 0005 | 0001 |
| 13h | Toner Color | Black | Black |
| 14h | Number Of Printable Sheets | 1000 | 4000 |
| 15h | Development Voltage | 300 V | 280 V |
| : | : | : | : |
| 21h | Digital Signature | $Sig_0$ | $Sig_1$ |
| : | : | : | : |
| 31h | Remaining Amount Warning Threshold | 950 | 3800 |
| : | : | : | : |
| Second Storage Area (RWM) | | | |
| 41h | Manufacture Date | 2024/1/31 | 2024/1/31 |
| 42h | Serial Number | 0005 | 0005 |
| 43h | Toner Color | Black | Black |
| 44h | Number Of Printable Sheets | 1000 | 1000 |
| 45h | Development Voltage | 300 V | 300 V |
| : | : | : | : |
| 51h | Digital Signature | $Sig_0$ | $Sig_0$ |
| : | : | : | : |
| 61h | Remaining Amount Warning Threshold | 950 | 950 |
| : | : | : | : |
| Common Storage Area (RW) | | | |
| 71h | Number of Printed Sheets | 980 | 0 |
| : | : | : | : |

In Table 2 also, a combination of "Manufacture Date" and "Serial Number" is used as the identification information for identifying individual cartridges 10. "Toner Color" and "Number of Printable Sheets" are examples of toner characteristic information. "Development Voltage" is an example of member characteristic information. "Remaining Amount Warning Threshold" is a threshold compared to "Number of Printed Sheets" for triggering a warning of a decrease in the remaining amount of toner.

At the time when the cartridge 10 is first manufactured, duplicates of the first identification information, the toner characteristic information, and the member characteristic information stored in the first storage area 31 are stored in the two second storage areas 33_1 and 33_2. At the time of the first remanufacture, the information inside the former second storage area 33_1 is rewritten to information for the cartridge 10 after remanufacture. For example, "Number of Printable Sheets" is rewritten from 1000 sheets to 4000 sheets. Also, "Development Voltage" is rewritten from 300 V to 280 V. Furthermore, the digital signature $SIG_0$ is rewritten to the digital signature $SIG_1$. "Number of Printed Sheets" stored in the common storage area 36 is reset to zero at the time of remanufacture.

Table 3 below illustrates an example of the information stored in the cartridge memory 20 before and after rewriting at the time of the second remanufacture according to the present modification example.

Table 3

Table 3. An example of the information stored before and after rewriting the second time

| Address | Parameter Name | Value (Before Remanufacture) | Value (After Remanufacture) |
|---|---|---|---|
| First Storage Area (RO) | | | |
| 01h | Manufacture Date | 2024/1/31 | 2024/1/31 |
| 02h | Serial Number | 0005 | 0005 |
| 03h | Toner Color | Black | Black |
| 04h | Number of Printable Sheets | 1000 | 1000 |
| 05h | Development Voltage | 300 V | 300 V |
| : | : | : | : |
| Second Storage Area (RWM) | | | |
| 11h | Manufacture Date | 2024/7/31 | 2024/7/31 |
| 12h | Serial Number | 0001 | 0001 |
| 13h | Toner Color | Black | Black |
| 14h | Number of Printable Sheets | 4000 | 4000 |
| 15h | Development Voltage | 280 V | 280 V |
| : | : | : | : |
| 21h | Digital Signature | $Sig_1$ | $Sig_1$ |
| : | : | : | : |
| 31h | Remaining Amount Warning Threshold | 3800 | 3800 |
| : | : | : | : |
| Second Storage Area (RWM) | | | |
| 41h | Manufacture Date | 2024/1/31 | 2025/5/31 |
| 42h | Serial Number | 0005 | 0003 |
| 43h | Toner Color | Black | Black |
| 44h | Number of Printable Sheets | 1000 | 3000 |
| 45h | Development Voltage | 300 V | 280 V |
| : | : | : | : |
| 51h | Digital Signature | $Sig_0$ | Sig2 |
| : | : | : | : |
| 61h | Remaining Amount Warning Threshold | 950 | 2850 |
| : | : | : | : |

(continued)

| Common Storage Area (RW) | | | |
|---|---|---|---|
| 71h | Number of Printed Sheets | 3960 | 0 |
| : | : | : | : |

At the time of the second remanufacture, the information inside the latter second storage area 33_2 is rewritten to information for the cartridge 10 after remanufacture. For example, "Number of Printable Sheets" is rewritten from 1000 sheets to 3000 sheets. Also, "Development Voltage" is rewritten from 300 V to 280 V. Furthermore, the digital signature $SIG_0$ is rewritten to the digital signature $SIG_2$. "Number of Printed Sheets" stored in the common storage area 36 is reset to zero at the time of remanufacture.

According to the present modification example, in the cartridge memory 20, the history of the remanufacturing information written by the remanufacturing apparatus 200 remains without being overwritten. Thus, on the basis of the history of the remanufacturing information, the degree of wear of the cartridge 10 can be estimated, the cause of trouble when some kind of trouble occurs can be tracked and investigated, and similar detailed device management can be implemented.

<4-4. Cartridge Authentication Processing>

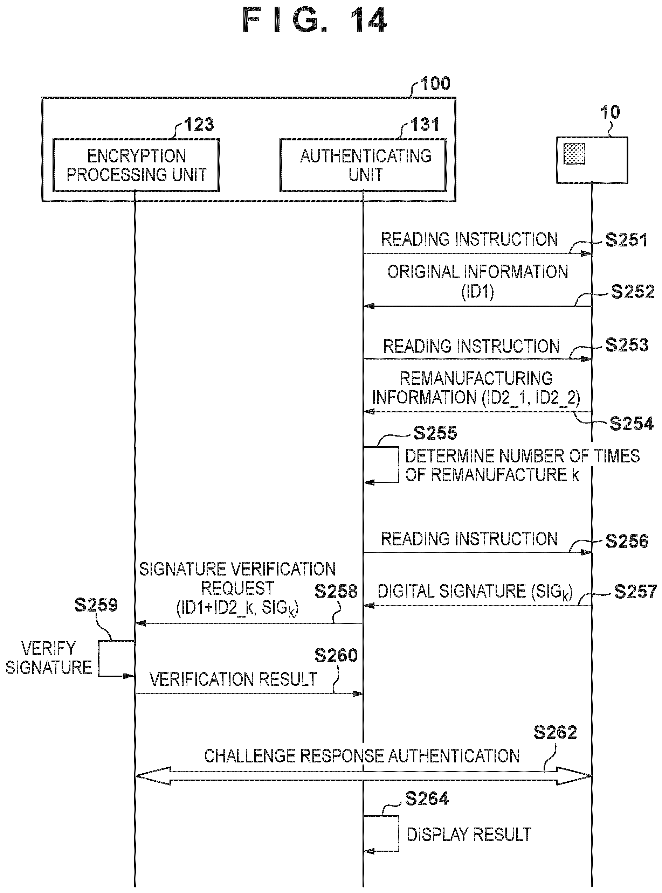

Fig. 14 is a sequence diagram illustrating an example of a flow of the cartridge authentication processing executed by the printer 100 when the cartridge 10 is attached to the printer 100 according to the present modification example. The cartridge 10 and the encryption processing unit 123 and the authenticating unit 131 of the printer 100 are mainly involved in the cartridge authentication processing illustrated in Fig. 14.

First, in S251, the authenticating unit 131 transmits to the cartridge 10 a reading instruction for reading out the original information stored in the first storage area 31 of the cartridge memory 20. In S252, the access control unit 24 of the cartridge 10 transmits to the printer 100 the original information read out from the first storage area 31. The original information includes the first identification information (ID1), for example.

Next, in S253, the authenticating unit 131 transmits to the cartridge 10 a reading instruction for reading out the remanufacturing information stored in the second storage areas 33_1 and 33_2 of the cartridge memory 20. In S254, the access control unit 24 of the cartridge 10 transmits to the printer 100 the remanufacturing information read out from the second storage areas 33_1 and 33_2. The remanufacturing information transmitted here includes two pieces of the second identification information (ID2_1 and ID2_2), for example.

Next, in S255, the authenticating unit 131 determines the number of times of remanufacture the current remanufacture corresponds to by comparing the first identification information (ID1) to the two pieces of the second identification information (ID2_1 and ID2_2). In this example, the current remanufacture is determined to be the k-th (k = 1 or 2) remanufacture.

Next, in S256, the authenticating unit 131 transmits to the cartridge 10 a reading instruction for reading out the digital signature $SIG_k$ stored in the second storage area 33_k of the cartridge memory 20. In S257, the access control unit 24 of the cartridge 10 transmits to the printer 100 the digital signature $SIG_k$ read out from the second storage area 33_k.

Next, in S258, the authenticating unit 131 outputs to the encryption processing unit 123 the original information, the remanufacturing information, and the digital signature $SIG_k$ received from the cartridge 10 and requests the encryption processing unit 123 to perform signature verification. In S259, the encryption processing unit 123 performs signature verification using the prestored public key $K_p$. In S260, the encryption processing unit 123 outputs the verification result to the authenticating unit 131. In a case where the signature verification is unsuccessful, the authenticating unit 131 may skip the subsequent processing step S262. Herein, it is assumed that the signature verification is successful.

Next, in S262, the authenticating unit 131 additionally performs challenge response authentication with the access control unit 24 of the cartridge 10. The challenge response authentication here may be performed according to any known method, and the flow will not be described here in detail.

Next, in S264, the authenticating unit 131 displays the result of the digital signature verification, determination of the number of times of remanufacture k, and the challenge response authentication on the screen of the operation unit 114. In a case where the signature verification or the challenge response authentication fails, a warning to the user may be displayed on the screen. In a case where the signature verification or the challenge response authentication fails, the authenticating unit 131 may prohibit the use of the cartridge 10, and if the user who received the warning selects to continue to use the cartridge 10, use of the cartridge 10 may be allowed.

The authenticating unit 131 stores the result of the cartridge authentication processing described above together with the value of the number of times of remanufacture k in internal memory. The value of the number of times of remanufacture k may be used in the job control processing for determining the address from which the remanufacturing information to be used in determining the image forming condition is to be read. When the cartridge 10 is temporarily detached from and then reattached to the printer 100, the authenticating unit 131 may execute the cartridge authentication processing again.

<4-5. Further Derivation Examples>

In the present modification example, an example in which the digital signature $SIG_n$ written to the n-th second storage area 33_n is generated on the basis of the first information (original information) and the second information (remanufacturing information) written to the n-th second storage area 33_n has been mainly described. However, the method for generating the digital signature $SIG_n$ is not limited to this example. In the derivation example of the present modification example, the digital signature $SIG_n$ may be generated on the basis of the first information (original information) and the second information (remanufacturing information) written to the first to the n-th second storage areas 33_1 to 33_n.

Note that, although an example in which a digital signature is used to verify the authenticity of the remanufacturing information has been mainly described in the present specification, a message authentication code may be used instead of the digital signature. In such a case, the printer 100 and the management server 300 may further hold a key pair (for example, a master key and a derived key) for verifying the authenticity of the remanufacturing information.

The technology according to the present specification may contribute to realization of a sustainable society such as a decarbonized/recycling-oriented society.

<5. Other Embodiments>

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

**Claims**

1.    A device (10) that can be attached to and detached from an image-forming apparatus (100), comprising:

a memory (20) including a first storage area (31) which is read-only and a second storage area (33) which is rewritable;
control circuitry (24); and
a connection interface (22) configured to be connected to an information processing apparatus (200) at a time of remanufacturing of the device,
wherein the first storage area is an area configured to store first information specific to the device,
the second storage area is an area configured to store second information read out and used by the image-forming apparatus and a digital signature generated based on the first information and the second information, and
at a time of remanufacturing of the device, the control circuitry is configured to:

receive the second information, the digital signature, and authentication information generated based at least on the second information from the information processing apparatus via the connection interface, and allow the second information and the digital signature to be written to the second storage area in a case where verification of the second information that is based on the authentication information is successful.

2. The device according to claim 1, wherein the authentication information is generated by a server apparatus configured to communicate with the information processing apparatus using a key that is different from an encryption key used to generate and verify the digital signature.

3. The device according to claim 1, wherein the authentication information is generated further based on the digital signature,

the second information is stored at a predetermined address of the memory,
the control circuitry is configured to receive a writing instruction including a write destination address of the second information from the information processing apparatus, and
the authentication information is generated further based on the write destination address.

4. The device according to any one of claims 1 to 3, further comprising:

encryption processing circuitry configured to hold a first derived key pre-generated based on a master key and the first information,
wherein the control circuitry is configured to transmit the first information to the information processing apparatus via the connection interface at a time of remanufacturing of the device,
the authentication information is generated using a second derived key generated based on the master key and the first information by a server apparatus configured to manage the master key, and
the encryption processing circuitry is configured to use the first derived key to perform the verification of the second information that is based on the authentication information obtained from the server apparatus and received from the information processing apparatus.

5. The device according to any one of claims 1 to 4, wherein the first information includes first identification information for identifying the device before remanufacturing, and
the second information includes a duplicate of the first identification information before remanufacturing of the device and is rewritten to second identification information for identifying the device after remanufacturing from the duplicate of the first identification information at a time of remanufacturing of the device.

6. The device according to any one of claims 1 to 5, further comprising:

a component element involved in an image-forming operation of the image-forming apparatus,
wherein the second information includes characteristic information indicating a characteristic of the component element.

7. The device according to claim 6, wherein the characteristic information is rewritten by the information processing apparatus at a time of remanufacturing of the device.

8. The device according to claim 6 or 7, wherein the component element involved in the image-forming operation includes at least one of a development agent supplied from the device to the image-forming apparatus and a member driven in the image-forming operation.

9. The device according to any one of claims 1 to 8, wherein the device is a cartridge attached to and used with the image-forming apparatus.

10. The device according to any one of claims 1 to 9, wherein the digital signature is used by the image-forming apparatus to verify the second information when the image-forming apparatus reads out and uses the second information from the device.

11. The device according to any one of claims 1 to 10, wherein the memory includes a number N of the second storage areas which are rewritable, where N being an integer greater than 1, and
at a time of an n-th remanufacture, an n-th (n = 1, ..., N) of the second storage areas is used for writing the second information read out and used by the image-forming apparatus after the n-th remanufacturing and the digital signature corresponding thereto.

12. The device according to claim 11, wherein the digital signature written to the n-th second storage area is generated on a basis of the first information and the second information written to the n-th second storage area.

13. The device according to claim 11, wherein the digital signature written to the n-th second storage area is generated based on the first information and respective pieces of the second information written to the first to the n-th second storage area.

14. A method for remanufacturing a device (10) that can be attached to and detached from an image-forming apparatus (100) that is executed using an information processing apparatus (200) connected to the device, the device including a memory (20) including a first storage area (31) which is read-only and a second storage area (33 which is rewritable, the method comprising:

reading out (S212) first information specific to the device from the first storage area of the device to the information processing apparatus;
obtaining (S217), by the information processing apparatus, second information to be read out from the device and used by the image-forming apparatus;
obtaining (S223), by the information processing apparatus, a digital signature generated based on the first information and the second information;
obtaining (S227), by the information processing apparatus, authentication information generated at least on a basis of the second information;
transmitting (S228), together with the authentication information from the information processing apparatus to the device, a writing instruction for writing the second information and the digital signature to the second storage area; and
writing (S230), by the device, the second information and the digital signature to the second storage area in a case where verification of the second information based on the authentication information is successful.

15. An information processing apparatus (200) for remanufacturing a device (10) that can be attached to and detached from an image-forming apparatus (100), the device including a memory including a first storage area which is read-only and a second storage area which is rewritable, the information processing apparatus comprising:

a connection interface (202) configured to be connected to the device at a time of remanufacturing of the device; and
control circuitry (211) configured to control writing of information from the information processing apparatus to the device, wherein
the control circuitry is configured to
read out first information specific to the device from the first storage area of the device,
obtain second information to be read out from the device and used by the image-forming apparatus,
obtain a digital signature generated based on the first information and the second information,
obtain authentication information generated based at least on the second information, and
transmit, together with the authentication information to the device, a writing instruction for writing the second information and the digital signature to the second storage area,
wherein writing of the second information and the digital signature to the second storage area is allowed in a case where verification of the second information that is based on the authentication information is successful in the device.

# F I G. 1

F I G. 2

F I G. 3

# FIG. 4

# FIG. 5

# F I G. 6

20

31

32
ORIGINAL INFORMATION
· CARTRIDGE ID (ID1)
· TONER CHARACTERISTIC
· MEMBER CHARACTERISTIC
etc.

RO

33

34
REMANUFACTURING INFORMATION
· CARTRIDGE ID (ID2)
· TONER CHARACTERISTIC
· MEMBER CHARACTERISTIC
etc.

RWM

35
DIGITAL SIGNATURE

36

37
COMMON INFORMATION
· OPERATION HISTORY INFORMATION
etc.

RW

24

**F I G. 7**

MANAGEMENT SERVER — 300

KEY MANAGEMENT UNIT — 315
- Km — 316
- Ks — 317

CPU — 311
- SIGNATURE GENERATION UNIT — 321
- MAC GENERATION UNIT — 322

MEMORY — 312

COMMUNICATION UNIT — 313

CARTRIDGE — 10

ACCESS CONTROL UNIT — 24

ENCRYPTION PROCESSING UNIT — 26
- Kd — 38

CARTRIDGE MEMORY — 20
- RO — 31
- RWM — 33
- RW — 36

22

REMANUFACTURING APPARATUS — 200

202

CPU — 211
- REWRITING PROCESSING UNIT — 221

MEMORY — 212

COMMUNICATION UNIT — 213

INPUT UNIT — 214

DISPLAY UNIT — 215

# F I G. 8

# F I G. 9

# F I G. 10

# FIG. 11

# FIG. 12

ORIGINAL INFORMATION ╌╌32
· CARTRIDGE ID (ID1)
· TONER CHARACTERISTIC
· MEMBER CHARACTERISTIC etc.

RO

31

REMANUFACTURING INFORMATION ╌╌34_1
· CARTRIDGE ID (ID2_1)
· TONER CHARACTERISTIC
· MEMBER CHARACTERISTIC etc.

RWM

DIGITAL SIGNATURE ╌╌35_1

33_1

REMANUFACTURING INFORMATION ╌╌34_2
· CARTRIDGE ID (ID2_2)
· TONER CHARACTERISTIC
· MEMBER CHARACTERISTIC etc.

RWM

DIGITAL SIGNATURE ╌╌35_2

33_2

COMMON INFORMATION ╌╌37
· OPERATION HISTORY INFORMATION
etc.

RW

36

20

# FIG. 13

# F I G. 14

Europäisches
Patentamt

European
Patent Office

Office européen
des brevets

# EUROPEAN SEARCH REPORT

**Application Number**

EP 25 18 9509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2024/118906 A1 (JERAN PAUL L [US] ET AL) 11 April 2024 (2024-04-11)<br>* abstract; figure 3 *<br>* paragraphs [0001], [0015], [0023], [0025], [0028], [0039] - [0043], [0048], [0057], [0058], [0063], [0064] - [0071], [0077], [0079], [0083] - [0085] * | 1-15 | INV.<br>G03G15/08<br>G03G15/00<br>G03G21/18 |
| X | US 2024/146540 A1 (CASTLE STEVEN T [US] ET AL) 2 May 2024 (2024-05-02)<br>* abstract; figures 1,2 *<br>* paragraphs [0001], [0010], [0012], [0016] - [0021], [0029] - [0033], [0038] - [0048], [0058], [0059], [0065], [0070] - [0074] * | 1,2,4-15 | |

-----

-----

**TECHNICAL FIELDS
SEARCHED        (IPC)**

G03G

The present search report has been drawn up for all claims

| Place of search | Date of completion of the search | Examiner |
|---|---|---|
| The Hague | 16 December 2025 | de Jong, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 9509

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2025

| Patent document cited in search report | Publication date | Patent family member(s) | | Publication date |
|---|---|---|---|---|
| US 2024118906 A1 | 11-04-2024 | US | 2024118906 A1 | 11-04-2024 |
| | | WO | 2022173444 A1 | 18-08-2022 |
| US 2024146540 A1 | 02-05-2024 | CN | 116830108 A | 29-09-2023 |
| | | EP | 4302220 A1 | 10-01-2024 |
| | | US | 2024146540 A1 | 02-05-2024 |
| | | WO | 2022186812 A1 | 09-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023106130 A
- WO 2022173444 A1